(19) Europäisches Patentamt
European Patent Office
Office européen des brevets

(11) EP 1 263 843 B1

(12) # FASCICULE DE BREVET EUROPEEN

(45) Date de publication et mention de la délivrance du brevet:
**30.01.2008 Bulletin 2008/05**

(21) Numéro de dépôt: **01907795.7**

(22) Date de dépôt: **14.02.2001**

(51) Int Cl.:
***C08J 3/03*** *(2006.01)* ***C09D 183/04*** *(2006.01)*

(86) Numéro de dépôt international:
**PCT/FR2001/000435**

(87) Numéro de publication internationale:
**WO 2001/060892 (23.08.2001 Gazette 2001/34)**

(54) **UTILISATION DE (CO)POLYMERES HYDROPHILES DANS LES EMULSIONS SILICONE AQUEUSES, RETICULABLES**

VERWENDUNG VON HYDROPLILEN (CO)POLYMEREN IN WÄSSRIGEN, VERNETZENDEN SILIKONEMULSIONEN

USE OF HYDROPHILIC (CO)POLYMERS IN CROSSLINKABLE AQUEOUS SILICONE EMULSIONS

(84) Etats contractants désignés:
**AT BE CH CY DE DK ES FI FR GB GR IE IT LI LU MC NL PT SE TR**

(30) Priorité: **15.02.2000 FR 0001866**

(43) Date de publication de la demande:
**11.12.2002 Bulletin 2002/50**

(73) Titulaire: **RHODIA CHIMIE**
**92100 Boulogne Billancourt (FR)**

(72) Inventeurs:
- **BENAYOUN, Jean-Paul**
**F-69006 Lyon (FR)**
- **MIROU, Christian**
**F-69005 Lyon (FR)**
- **PHAN, Charles**
**F-93300 Aubervilliers (FR)**
- **WONG, Kenneth**
**F-75010 Paris (FR)**

(74) Mandataire: **Fleurance, Raphaël et al**
**Cabinet Plasseraud**
**52 rue de la Victoire**
**75440 Paris Cedex 09 (FR)**

(56) Documents cités:
**EP-A- 0 516 109**
**EP-A- 0 819 735**
**WO-A-99/35181**
**US-A- 5 108 782**
**US-A- 5 700 870**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).



Printed by Jouve, 75001 PARIS (FR)

## Description

DOMAINE TECHNIQUE :

Le domaine de l'invention est celui des compositions silicones réticulables ou réticulées, susceptibles d'être utilisées, notamment, pour former un revêtement ou film hydrofuge et anti-adhérent pour support fibreux ou non, par exemple en papier ou analogue, ou bien encore en polymère naturel ou synthétique.

Plus précisément, l'invention se rapporte aux dispersions ou émulsions silicones aqueuses du type de celle comprenant :

· des polyorgan·osiloxanes (POS) fonctionnalisés porteurs, sur une même molécule ou non :

- ■ -a- de motifs Si-H et Si-IE avec IE représentant un groupement comportant au moins une insaturation éthylénique, de préférence vinylique ; les motifs Si-H étant susceptibles de réagir avec les motifs Si-IE par polyaddition ;
- ■ -b- et/ou de motifs Si-OR° (avec R° représentant un alkyle en C1-C6) susceptibles de réagir entre eux par polycondensation ;
- ■ -c- et/ou de motifs Si-OR° (avec R° représentant un alkyle en C1-C6) et de motifs Si-H susceptibles de réagir entre eux par déshydrogénocondensation ;
- ■ -d- de motifs réactifs susceptibles de réagir entre eux par voie cationique et/ou radicalaire (e.g. des motifs acrylate ou époxy) ;

· un catalyseur **- C -** approprié pour les réactions susvisées , respectivement :-a-métallique de préférence platinique, -b- et -c- métallique de préférence staneux , -d- photo-amorceur cationique et/ou radicalaire (e.g.sels d'onium) ;
· d'autres additifs (charges , accélérateurs, inhibiteurs , pigments, tensioactifs......).

Sont également visés par les présentes, les procédés de fabrication d'articles en silicone réticulé, notamment des revêtements e.g. hydrofuges et/ou anti-adhérents pour supports fibreux ou non (papier), à partir de l'émulsion susvisée.

ART ANTERIEUR :

Les polyorganosiloxanes sont connus pour leur aptitude à rendre anti-adhérentes des surfaces de supports divers, (e.g. papier, tissu, film polymère ou autres). Les traitements anti-adhérents sont faciles à effectuer avec les silicones, car ces derniers peuvent se présenter sous forme de polymère, solution ou émulsion liquide réticulable, qui sont facilement applicables et étalables sur des supports, à cadence et à échelle industrielle. C'est ainsi que les compositions silicones sont, par exemple, utilisées comme agent de démoulage, notamment dans la confection des pneus et dans l'injection de matières plastiques, ou bien encore pour le revêtement des moules métalliques utilisés en pâtisserie ou des filets dans les fours à pain ou enfin pour la réalisation de papier protecteur d'adhésifs (étiquette, papier décoratif), de papier intercalaire pour la manipulation des masses collantes (stratifié, caoutchouc cru), de papier anti-adhérent pour la cuisson des pâtisseries.

A titre illustratif, on peut indiquer que les demandes ou brevets US-A-4 347 346, EP-A-0 219 720, EP-A-0 454 130 et EP-A-0 523 660 décrivent des polyorganosiloxanes, destinés à être utilisés dans l'application anti-adhérence papier.

Les compositions silicones selon l'art antérieur visées ci-dessus sont employées dans ce domaine de l'anti-adhérence papier, sous forme de bains d'émulsion (ou bains d'enduction) qui servent à enduire les supports de films, qui sont ensuite réticulés sous activation thermique et/ou sous rayonnement (UV, faisceau d'électrons), pour former le revêtement hydrofuge et anti-adhérent.

Les systèmes d'émulsions silicones aqueuses auxquels on s'intéresse plus particulièrement dans le cadre du présent exposé sont ceux contenant des polyorganosiloxanes (POS) à motifs Si-H et les POS à motifs Si-vinyle. Classiquement, ces systèmes polymérisent par catalyse au platine, selon un mécanisme de polyaddition (également dénommé hydrosilylation) Si-H/Si-Vi.

Hormis les POS Si-H et les POS Si-Vi et le catalyseur au platine, ces émulsions peuvent contenir une ou plusieurs espèces hydrosolubles comme l'hydroxyéthylcellulose, l'amidon, l'alcool polyvinylique... ayant notamment un rôle d'émulsifiant, d'épaississant et stabilisant, mais également le rôle de promouvoir deux effets antinomiques à savoir : l'anti-adhérence et l'imprimabilité.
Des tensioactifs peuvent également rentrer dans la composition de telles émulsions.

Les bains d'émulsions silicone aqueuses de l'état de la technique ont souffert, pendant un certain temps, d'une

certaine instabilité chimique se traduisant par la production de gel et de mousse (chimique) indésirables.
Ces gels proviennent de réaction prématurée d'addition entre des motifs Si-Vi et des motifs Si-H, qui conduisent au pontage d'atomes de silicium, d'où une certaine augmentation de la viscosité du milieu. Les mousses résultent quand à elles de réaction parasites de déshydrogéno-condensation entre les groupements Si-H des POS contenus dans le bain et des groupements hydroxyle apportés par l'eau et d'autres additifs de ces émulsions.

Les bains d'émulsions aqueuses connues avaient par ailleurs un autre inconvénient majeur, à savoir une instabilité physique se cumulant à l'instabilité chimique évoquée ci-dessus. En effet, dès lors que l'émulsion est soumise à un cisaillement (agitation), ce qui est notamment le cas lorsque l'émulsion circule dans les machines industrielles d'enduction (en particulier au niveau des pompes ou des têtes d'enduction), on assiste à un phénomène de coalescence des gouttelettes de phase silicone dispersée. Cela a pour conséquence une gélification, d'où une perte de réactivité et une moindre qualité du revêtement notamment au regard de l'anti-adhérence. Ce phénomène est aggravé par le fait que la température de l'émulsion peut augmenter au fur et à mesure de sa circulation dans les machines industrielles d'enduction. Ce problème de coalescence sous cisaillement se pose avec d'autant plus d'acuité pour des systèmes d'enduction à cylindres gravés. En effet, dès lors que, du fait de la coalescence, on dépasse une certaine granulométrie pour la phase dispersée, cette dernière ne remplit pas ou remplit mal les aspérités gravées sur le cylindre d'enduction. Dans ces conditions, il est clair que le couchage est de moindre qualité.
Il importe donc de combattre cette coalescence prématurée sous cisaillement car elle nuit au couchage, à la cinétique de réticulation et donc, in fine, à la qualité du revêtement anti-adhérent déposé sur le support, par exemple en papier.

La déposante est parvenue à résoudre le problème de l'instabilité chimique (gel et mousse) et partiellement le problème d'instabilité physique (coalescence sous cisaillement) dans les bains d'émulsions silicone aqueuses destinés à réticuler pour former des revêtements anti-adhérents e.g. pour papier, en proposant la mise en oeuvre comme additif dans ces émulsions d'un agent de fixation et de maintien du pH entre 6 et 8, cet agent étant avantageusement un système tampon tel que $NaHCO_3$. Cette invention est décrite dans la demande de PCT Internationale WO PCT/FR98/02858 (WO 99/35181).
Les émulsions silicone aqueuses selon cette demande PCT restent perfectibles, en ce qui concerne leur résistance à la coalescence sous cisaillement.

En outre, s'agissant de leurs propriétés à se transformer en revêtement silicone réticulé anti-adhérent sur support souple, par exemple en papier, il a pu être constaté qu'un besoin subsiste au regard de l'amélioration de l'homogénéité et de la régularité du dépôt de l'émulsion sur les deux faces d'un support souple, par exemple en papier.
La régularité des dépôts de silicone de part et d'autre du support est recherchée car elle.facilite le réglage des têtes d'enduction et permet d'ajuster, a minima et sans risque, le dépôt de la couche silicone.

De plus, on recherche également à diminuer les dépôts de silicone sur les cylindres de la machine d'enduction. Ces dépôts de silicone résiduels posent des problèmes d'entretien et perturbent le bon déroulement des dépôts de revêtements, en particulier, dans le cas où la machine d'enduction comprend des cylindres sécheurs.

Des progrès restent donc à faire sur les aspects suivants:

- ❖ coalescence sous cisaillement,
- ❖ régularité du dépôt sur les deux faces du support,
- ❖ réduction des dépôts résiduels de silicone sur les cylindres de la machine d'enduction,
- ❖ et maintien, voire amélioration, des propriétés anti-mousse, pouvant aller jusqu'à la suppression de la formation intempestive de mousses.

On connaît par ailleurs au travers des brevets américains n$^{os}$ 5,108,782 & 5,229,212, des émulsions silicones aqueuses précurseurs de revêtements anti-adhérents. Ces émulsions comprennent une phase dispersée silicone à base de polydiméthylsiloxane porteur de motifs Si-H, du polydiméthylsiloxane à motifs Si-Vinyle et un catalyseur à base d'un complexe de platine, tandis que la phase aqueuse homogène de ces émulsions comporte un agent épaississant polymère dispersible dans l'eau ou soluble dans l'eau, à savoir un polyoxyéthylène (nom commercial : "POLYOX WSR-301" / Union Carbide). La matière sèche de ces émulsions comprend 94 % en poids de silicone 4,5 % en poids d'émulsion catalysante et 1,5 % en poids de polyoxyéthylène.

Comme tous les épaississants employés classiquement dans les émulsions silicone aqueuses de ce type, le polyoxyéthylène est un épaississant qui a vocation à accroître la tenue du silicone sur la surface du support, en l'empêchant de pénétrer à l'intérieur de ce dernier. Les épaississants selon ces brevets US agissent par accroissement de la viscosité de l'émulsion et par leur capacité à piéger l'eau.

L'agent épaississant polymère hydrophile préférablement retenu dans ces brevets américains antérieurs, est compris dans une gamme de poids moléculaires allant de $1.10^5$g/mole à $10.10^6$ g/mole. En outre, quand il s'agit de poly-oxyde d'éthylène, la masse molaire préférée est alors comprise entre $5.10^5$ et $1.10^6$ g/mole.

Outre le polyoxyéthylène, l'agent épaississant selon ces brevets américains peut être choisi parmi les polyoxypropylènes, les copolymères d'oxyde de propylène/éthylène ou les polyacrylamides.

Par ailleurs, il est à noter que ces brevets américains antérieurs ne font pas allusion à l'amélioration :

o de la stabilité à la coalescence sous cisaillement,
o de la régularité et de l'homogénéité des dépôts d'émulsions silicone sur les deux faces d'un support souple, par exemple en papier,

pas plus qu'à la diminution des dépôts de silicone sur les cylindres de la machine d'enduction après application d'un film d'émulsion silicone aqueuse, et encore moins à la diminution de la formation indésirable de mousses.

BREF EXPOSÉ DE L'INVENTION :

Dans un tel état de la technique, la déposante s'est fixée comme objectif essentiel de mettre à jour un nouvel additif pour émulsion silicone aqueuse :

♦ en vue d'améliorer leur stabilité à la coalescence sous cisaillement,
♦ et/ou en vue de parfaire la régularité et l'homogénéité du dépôt d'un film d'émulsion silicone sur les deux faces d'un support souple, par exemple en papier,
♦ et/ou en vue de limiter les dépôts résiduels de silicone sur les cylindres de la machine d'enduction, après dépôt du film d'émulsion silicone,
♦ et/ou en vue de réduire voire supprimer la formation de mousses.
Un autre objectif essentiel de l'invention est de proposer un procédé de préparation des émulsions silicone aqueuses évoquées ci-dessus.

Un autre objectif de l'invention est de proposer des supports souples, par exemple en papier, présentant un revêtement silicone réticulé anti-adhérent de bonne qualité sur le plan du couchage et de l'anti-adhérence;
ce revêtement :

- formant par ailleurs un dépôt régulier de part et d'autre du support souple, par exemple en papier,
- n'entraînant pas de dépôt de silicone sur les cylindres de la machine à enduire,
- et offrant de bonnes propriétés de brillance et de retenue en surface du support.

Ces objectifs parmi d'autres sont atteints par la présente invention qui propose l'utilisation d'au moins un (co) polymère hydrophile stabilisant de masse molaire Mw telle que $20.10^6 \geq Mw \geq 4.10^6$ g/mole, pour réduire les dépôts résiduels sur les cylindres d'une machine d'enduction, de silicone issu d'émulsions silicone aqueuses propres à réticuler pour former des revêtements anti-adhérents sur des supports souples, ledit (co)polymère hydrophile stabilisant étant choisi dans le groupe comprenant les polyéthers aliphatiques obtenus à partir de monomères comprenant au moins un reste alkylène linéaire ou ramifié ayant de 1 à 6 atomes de carbone, et ledit (co)polymère hydrophile stabilisant étant sélectionné de telle sorte que l'émulsion possède les caractéristiques granulométriques suivantes, s'agissant de la phase dispersée silicone:

$$D_{50} \leq 7\ \mu m$$

$$D_{90} \leq 20\ \mu m$$

au bout de 4 heures dans un test de stabilité T défini dans la description et pour une granulométrie initiale telle que :

$$D_{50} \leq 0{,}7\ \mu m$$

$$D_{90} \leq 1{,}5\ \mu m.$$

L'utilisation de ce (co)polymère hydrophile stabilisant est également

➢ pour améliorer la stabilité à la coalescence sous cisaillement d'émulsions silicone aqueuses propres à réticuler

pour former des revêtements anti-adhérents sur des supports souples, par exemple en papier,

➢ et/ou pour améliorer la régularité et l'homogénéité du dépôt d'émulsions silicone aqueuses réticulables, sur les deux faces de supports souples, par exemple en papier,

➢

➢ et/ou pour limiter voire supprimer la tendance à mousser qu'ont les émulsions silicone aqueuses propres à réticuler pour former des revêtements anti-adhérents sur des supports souples , par exemple en papier.

*(Mw : masse molaire moyenne).*

Ainsi, grâce à l'emploi de cet additif, les émulsions silicone aqueuses notamment pour former des revêtements anti-adhérents sur supports souples (papier) ne sont plus sujettes au phénomène de coalescence sous cisaillement. Elles conservent leurs propriétés au niveau de l'application, à savoir : elles adhèrent parfaitement sur le support par exemple en papier, elles se mettent facilement et correctement sous forme de film et leur réticulation s'opère de manière rapide et suffisante. Ainsi ces émulsions dans lesquelles on utilise, conformément à l'invention, un stabilisant hydrophile judicieusement sélectionné, sont propres à former des couches anti-adhérentes de qualité.

L'amélioration de la stabilité sous cisaillement (non-coalescence) que procure l'additif mis en oeuvre selon l'invention aux émulsions silicone aqueuses, repose sur l'apport d'une propriété rhéologique particulière à la phase continue. La propriété dont il est question est la viscosité élongationnelle $\eta_{el}$. Ainsi, conformément à l'invention, on sélectionne des macromolécules promoteur de viscosité élongationnelle $\eta_{el}$. Les polymères hydrophiles retenus tendent à transformer le régime de turbulence que subit l'émulsion quand elle est sous agitation (sous cisaillement), en un régime laminaire. Cela permet de limiter les chocs entre les particules de phase dispersée, et donc de freiner la coalescence proscrite.

EXPOSÉ DÉTAILLÉ DE L'INVENTION :

Suivant une caractéristique de l'invention, le stabilisant est choisi dans le groupe de (co)polymères hydrophiles comprenant les polyéthers aliphatiques obtenus à partir de monomères comprenant au moins un reste alkylène linéaire ou ramifié ayant de 1 à 6 atomes de carbone, de préférence :

o poly(méthylène oxyde)
o poly(éthylène oxyde)
o poly(propylène oxyde)
o copoly(méthylène oxyde)(propylène oxyde)
o polyoxéthane
o copoly(méthylène oxyde)(propylène oxyde).

Ces additifs polymères judicieusement additionnés permettent d'augmenter la viscosité élongationnelle, ce qui limite ou supprime la turbulence et réduit la résistance rencontrée par les particules de phase dispersée silicone dans l'émulsion.

Les additifs promoteurs de viscosité élongationnelle sont des macromolécules hydrophiles longues et flexibles de haut poids moléculaire Mw. En pratique, ce sont des polymères de haute masse moléculaire Mw ou bien encore des micelles géantes.

Par ailleurs, ces stabilisants de type (co)polyoxyde d'alkylène sont employés à une concentration Cs, exprimée en % poids par rapport à la masse de POS de l'émulsion, telle que :

$$0,1 \leq Cs \leq 5$$

de préférence

$$0,5 \leq Cs \leq 2.$$

A titre d'exemple de stabilisant, on peut citer :

- Les poly(éthylène oxyde) de formule **a1** :

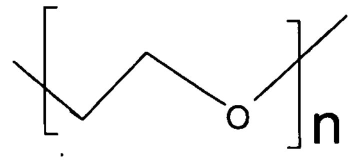

- Les polyoxydes de propylène de formule **a2 :**

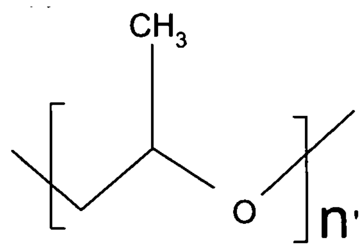

Dans les formules ci-dessus **a1** et **a2**, n, n' sont choisis de manière à obtenir les masses molaires définies ci-dessus. Il est du mérite de la déposante d'avoir déterminé un critère de sélection fiable et reproductible, pour la sélection du stabilisant promoteur de viscosité élongationnelle. Ainsi, ce stabilisant est choisi de telle sorte que l'émulsion possède les caractéristiques granulométriques suivantes, s'agissant de la phase dispersée silicone:

$$D_{50} \leq 7 \mu m\text{, de préférence } \leq 3\ \mu m$$

$$D_{90} \leq 20 \mu m \text{ de préférence } \leq 10\ \mu m$$

au bout de 4 heures dans un test de stabilité **T** et pour une granulométrie initiale telle que :

$$D_{50} \leq 0{,}7 \mu m$$

$$D_{90} \leq 1{,}5\ \mu m$$

*$D_{50}$* = diamètre en dessous duquel se situe au moins 50% de la population de particules.
*$D_{90}$* = diamètre en dessous duquel se situe au moins 90% de la population de particules.
Plus précisément, au sens de l'invention, le paramètre $D_{50}$ (ou $D_{90}$) est la taille médiane de la répartition granulométrique. Elle peut être déterminée sur le graphe de répartition granulométrique cumulé, obtenu par l'une des techniques analytiques évoquées ci-dessous, en déterminant la taille correspondant au cumul de 50% (ou de 90 %) de la population des particules. Concrètement, ce paramètre granulométrique $D_{50}$ (ou $D_{90}$) correspond à la dimension maximale moyenne d'au moins 50% (ou 90%) de la masse de particules considérées, une $D_{50}$ (ou $D_{90}$) de 10 $\mu$m indique que 50% (ou 90%) des particules ont une taille inférieure à 10$\mu$m. Les mesures de granulométrie peuvent être effectuées par des techniques classiques telles que sédimentation, diffraction laser (par exemple COULTER® LSI30), microscopie optique couplée à une analyse d'image, etc.

Le test de stabilité **T** est défini ci-après. On utilise un Becher en verre de 7,5 cm de diamètre et de 13 cm de longueur thermostatée à 30°C. La pale utilisée est une pale à hélice (3 pales) de 3 cm de diamètre et se situe à une distance de 2 cm du fond du becher. La vitesse d'agitation est de 2000 tpm.
Toutes les heures, un échantillon est prélevé et la taille de l'émulsion est mesurée sur un granulomètre HORIBA.
Ce test de stabilité T met en évidence l'absence de coalescence sous cisaillement de l'émulsion silicone aqueuse additivé par le ou les stabilisants sélectionnés.
L'utilisation conforme à l'invention dudit stabilisant peut également avoir comme effet d'améliorer la régularité et l'homogénéité du dépôt d'émulsion en couche sur les deux faces d'un support papier. Grâce au stabilisant, le dépôt

d'émulsion en couche est quasi identique sur les deux faces du papier. La régularité et l'homogénéité des dépôts silicone sont mesurées en gramme par $m^2$ selon la méthode de fluorescence X sur appareil du type Oxford X-Ray 3000, sur les deux faces du papier. Ces dépôts sont réalisés par enduction sur une machine de type "size press", d'un support papier sulfurisé non poreux. La réticulation s'effectue à 130°C.

Un autre effet recherché au travers de l'utilisation d'un stabilisant polymère hydrophile est la réduction des dépôts de silicone sur les rouleaux de la machine d'enduction ("réduction des Dusts"). Cette réduction est évaluée visuellement. Il en va de même en ce qui concerne la limitation voire l'annihilation de la formation de mousses indésirables. A ce propos, il y a lieu de noter que cette fonction avantageuse du stabilisant utilisé conformément à l'invention, permet d'éviter ou de limiter le recours à un anti-mousse.

Dans la mesure où le stabilisant utilisé conformément à l'invention limite également la pénétration du silicone dans le support souple, par exemple papier, il peut être envisagé de diminuer l'extrait sec des émulsions silicone aqueuses employées en enduction pour former des revêtements anti-adhérence papier. Il en résulte une économie significative, qui constitue un atout important de l'invention.

Les émulsions concernées par l'utilisation conforme à l'invention sont du type de celles comprenant :

- **A** - au moins un polyorganosiloxane (POS) porteur de motifs de réticulation Si-alcényle, de préférence Si-Vi ;
- **B** - au moins un POS porteur de motifs de réticulation Si-H ;
- **AB** - et/ou au moins un POS porteur de motifs Si-alcényle et Si-H ;
- **C** - au moins un catalyseur de polyaddition, de préférence à base de platine ;
- **D** - au moins un stabilisant tel que défini ci-dessus ;
- **E** - au moins un inhibiteur de réticulation, de préférence choisi parmi les alcools acétyléniques ;
- **F** - et/ou au moins un agent de fixation et de maintien du pH (de préférence un tampon et plus préférablement encore $NaHCO_3$) ;
- **G** - éventuellement au moins un tensioactif ;
- **H** - éventuellement au moins un alcool polyvinylique APV tel que défini ci-dessous ;
- **I** - éventuellement au moins un autre additif choisi parmi les bactéricides, et/ou les agents antigels, et/ou de mouillage, et /ou les anti-mousses et/ou les charges, et/ou les latex synthétiques, et/ou les colorants, et/ou les acidifiants.

De préférence, on utilise au moins un POS **A** de type Si alcényle, par exemple Si-Vi, et au moins un POS **B** de type Si-H.

Le POS **A** est pondéralement l'un des constituants essentiels de l'émulsion.

Avantageusement, ce POS **A** est un produit comprenant des motifs de formule :

$$W_aZ_bSiO_{\frac{4-(a+b)}{2}} \qquad (A.1)$$

dans laquelle :

- W est un groupe alcényle, de préférence vinyle ou allyle,
- Z est un groupe hydrocarboné monovalent, exempt d'action défavorable sur l'activité du catalyseur et choisi, de préférence, parmi les groupes alkyles ayant de 1 à 8 atomes de carbone inclus, avantageusement, parmi les groupes méthyle, éthyle, propyle et 3,3,3-trifluoropropyle et ainsi que parmi les groupes aryles et, avantageusement, parmi les radicaux xylyle et totyle et phényle,
- a est 1 ou 2, b est 0, 1 ou 2 et a + b est compris entre 1 et 3, éventuellement au moins une partie des autres motifs sont des motifs de formule moyenne :

$$Z_cSiO_{\frac{4-(c)}{2}} \qquad (A.2)$$

dans laquelle Z a la même signification que ci-dessus et c a une valeur comprise entre 0 et 3, par exemple entre 1 et 3.

Z est généralement choisi parmi les radicaux méthyle, éthyle et phényle, 60 % molaire au moins des radicaux Z étant des radicaux méthyle.

Il est avantageux que ce polydiorganosiloxane ait une viscosité (à 25°C) au moins égale à 10 mPa.s, de

préférence comprise entre 50 et 1.000 mPa.s.

Toutes les viscosités dont il est question dans le présent exposé correspondent à une grandeur de viscosité dynamique à 25° C dite "Newtonienne ", c'est-à-dire la viscosité dynamique qui est mesurée, de manière connue en soi, à un gradient de vitesse de cisaillement suffisamment faible pour que la viscosité mesurée soit indépendante du gradient de vitesse.

Le polyorganosiloxane **A** peut être uniquement formé de motifs de formule (**A.1**) ou peut contenir, en outre, des motifs de formule (**A.2**). De même, il peut présenter une structure linéaire ramifiée cyclique ou en réseau. Son degré de polymérisation est, de préférence, compris entre 2 et 5 000.

Des exemples de motifs siloxyle de formule **(A.1**) sont le motif vinyldiméthylsiloxane, le motif vinylphénylméthylsiloxane et le motif vinylsiloxane.

Des exemples de motifs siloxyle de formule **(A.2)** sont les motifs $SiO_{4/2}$, diméthylsiloxane, méthylphénylsiloxane, diphénylsiloxane, méthylsiloxane et phénylsiloxane.

Des exemples de polyorganosiloxanes A sont les diméthylpolysiloxanes à extrémités diméthylvinylsilyle, les copolymères méthylvinyldiméthylpolysiloxanes à extrémités triméthylsilyle, les copolymères méthylvinyldiméthylpolysiloxanes à extrémités diméthylvinylsilyle, les méthylvinylpolysiloxanes cycliques.

Le polyorganosiloxane B est de préférence du type de ceux comportant des motifs siloxyle de formule :

$$H_dL_eSiO_{\frac{4-(d+e)}{2}} \qquad (B.1)$$

dans laquelle :

- L est un groupe hydrocarboné monovalent, exempt d'action défavorable sur l'activité du catalyseur et choisi, de préférence, parmi les groupes alkyles ayant de 1 à 8 atomes de carbone inclus et, avantageusement, parmi les groupes méthyle, éthyle, propyle et 3,3,3-trifluoropropyle et ainsi que parmi les groupes aryles et, avantageusement, parmi les radicaux xylyle et totyle et phényle,
- d est 1 ou 2, e est 0, 1 ou 2, d + e a une valeur comprise entre 1 et 3,
- éventuellement, au moins une partie des autres motifs étant des motifs de formule moyenne :

$$L_gSiO_{\frac{4-g}{2}} \qquad (B.2)$$

dans laquelle L a la même signification que ci-dessus et g a une valeur comprise entre 0 et 3.

La viscosité dynamique $\eta_d$ (à 25° C) de ce polyorganosiloxane **B** ≥ à 5 de préférence à 10 et, plus préférentiellement encore, est comprise entre 20 et 1000 mPa.s.

Le polyorganosiloxane **B** peut être uniquement formé de motifs de formule (**II.1**) ou comporte en plus des motifs de fomule (**B.2**).

Le polyorganosiloxane **B** peut présenter une structure linéaire ramifiée cyclique ou en réseau. Le degré de polymérisation est supérieur ou égal à 2. Plus généralement, il est inférieur à 5 000. Des exemples de motifs de formule (**B.1**) sont :

$H(CH_3)_2SiO_{1/2}$, $HCH_3SiO_{2/2}$, $H(C_6H_5)SiO_{2/2}$

Les exemples de motifs de formule (**B.2**) sont les mêmes que ceux donnés plus haut pour les motifs de formule (**A.2**).

Des exemples de polyorganosiloxane **B** sont :

- les diméthylpolysiloxanes à extrémités hydrogénodiméthylsilyle, poly(diméthylsiloxane) (méthylhydrogénosiloxy) $\alpha,\omega$-diméthylhydrogéno-siloxane.
- les copolymères à motifs diméthyl-hydrogénométhylpolysiloxanes (diméthyl) à extrémités triméthylsilyle,
- les copolymères à motifs diméthyl-hydrogénométhylpolysiloxanes à extrémités hydrogénodiméthylsilyle,
- les hydrogénométhylpolysiloxanes à extrémités triméthylsilyle,
- les hydrogénométhylpolysiloxanes cycliques.

Les bases de compositions silicones polyaddition peuvent ne comporter que des polyorganosiloxanes **A** et **B** linéaires comme, par exemple, celles décrites dans les brevets : US-A-3 220 972, US-A-3 697 473 et US-A-4 340 709

ou comporter à la fois des polyorganosiloxanes **A** et **B** ramifiés ou en réseau, comme par exemple celles décrites dans les brevets : US-A-3 284 406 et US-A-3 434 366.

Les catalyseurs **C** sont également bien connus. On utilise, de préférence, les composés du platine et du rhodium. On peut, en particulier, utiliser les complexes du platine et d'un produit organique décrit dans les brevets US-A-3 159 601, US-A-3 159 602, US-A-3 220 972 et les brevets européens EP-A-0 057 459, EP-A-0 188 978 et EP-A-0 190 530, les complexes du platine et d'organosiloxanes vinylés décrits dans les brevets US-A-3 419 593, US-A-3 715 334, US-A-3 377 432 et US-A-3 814 730. Le catalyseur généralement préféré est le platine. Dans ce cas, la quantité pondérale de catalyseur C, calculée en poids de platine-métal, est généralement comprise entre 2 et 400 ppm, de préférence entre 5 et 200 ppm basée sur le poids total des polyorganosiloxanes **A** et **B**.

L'agent **F** de fixation et de maintien du pH est, de préférence, un système tampon comprenant $HCO_3^-/CO_3^{2-}$ et/ou $H_2PO_4^-/HPO^{2-}{}_4$. Ainsi, pour obtenir l'effet tampon souhaité, il conviendra d'introduire conformément à l'invention un sel d'$HCO_3^-$ et/ou $H_2PO_4^-$ comme par exemple $NaHCO_3$ et/ou $Na_2CO_3$ et/ou $NaH_2PO_4$ et/ou $Na_2HPO_4$. Il va de soi que tout autre sel à contre-anion différent (e.g. K) pourrait convenir. De manière particulièrement préférée, on met en oeuvre en pratique un système tampon constitué par du $NaHCO_3$ que l'on incorpore dans l'émulsion.

Selon une variante, le système tampon peut être un moyen permettant d'assurer une régulation du pH de l'émulsion en suivant l'évolution de son pH et en corrigeant ses variations par incorporation dans l'émulsion de quantités adaptées d'au moins un agent -**F**-, qui peut être un acide ou une base selon le sens de variation du pH.
L'acide ou la base rajouté à l'émulsion selon les besoins, à titre d'agent -F-, pour la régulation exogène du pH, peut-être minéral ou organique. Il peut également s'agir d'un sel d'acide fort (ou faible) ou de base forte (ou faible). A titre d'exemples de bases fortes, on peut citer : la triéthanolamine, la soude ou la potasse.

Avantageusement, le système catalytique de cette émulsion élastomère silicone de type polyaddition, comprend au moins un stabilisant E ou ralentisseur de la réaction d'addition (inhibiteur de réticulation), choisi parmi les composés suivants :

- polyorganosiloxanes, avantageusement cycliques et substitués par au moins un alcényle, le tétraméthylvinyltétrasiloxane étant particulièrement préféré,
- la pyridine,
- les phosphines et les phosphites organiques,
- les amides insaturés,
- les maléates alkylés,
- et les alcools acétyléniques.

Ces alcools acétyléniques, (Cf. FR-B-1 528 464 **et** FR-A-2 372 874), qui font partie des bloqueurs thermiques de réaction d'hydrosilylation préférés, ont pour formule :

$$R^1 - (R^2)\ C\ (OH) - C \equiv CH$$

formule dans laquelle,

- $R^1$ est un radical alkyle linéaire ou ramifié, ou un radical phényle ;
- $R^2$ est H ou un radical alkyle linéaire ou ramifié, ou un radical phényle ;

les radicaux $R^1$, $R^2$ et l'atome de carbone situé en a de la triple liaison pouvant éventuellement former un cycle ;
le nombre total d'atomes de carbone contenu dans $R^1$ et $R^2$ étant d'au moins 5, de préférence de 9 à 20.
Lesdits alcools **E** sont, de préférence, choisis parmi ceux présentant un point d'ébullition supérieur à 250˚C. On peut citer à titre d'exemples :

- l'éthynyl-1-cyclohexanol-1;
- le méthyl-3-dodécyne-1-ol-3 ;
- le triméthyl-3,7,11-dodécyne-1-ol-3 ;
- le diphényl-1,1-propyne-2-ol-1 ;
- l'éthyl-3 éthyl-6-nonyne-1-ol-3 ;
- le méthyl-3-pentadécyne-1-ol-3.

Ces alcools $\alpha$-acétyléniques sont des produits du commerce.
Un tel ralentisseur E est présent à raison de 3 000 ppm au maximum, de préférence à raison de 100 à 2000 ppm par rapport au poids total des organopolysiloxanes (**A**) et (**B**).

Le ou les tensioactifs (G) susceptibles d'être présents dans l'émulsion suivant l'invention à titre d'agent d'émulsification, sont de nature non-ionique ou ionique.

En pratique, on peut utiliser comme non ioniques des alkyles phénols, des alcools gras ou des acides gras porteurs de groupements oxyde d'alkylène par exemple éthylène ou propylène e.g. : nonylphénol comprenant entre 9 et 30 groupements oxyde d'éthylène (OE) ou acide oléique avec 2 à 8 OE.

Les tensioactifs ioniques de préférence anioniques qui peuvent être mis en oeuvre sont, e.g. des sulfates, sulfonates, phosphates, sulfosuccinates, sulfosuccinamates, sulfoacétates, ou des dérivés d'acides aminés.

Pour plus de détails sur les tensioactifs disponibles, on se référera aux ouvrages de référence, et par exemple à l'article paru dans " Informations Chimie n° 146 - Juin-Juillet 1975 - p. 119-126 ".

S'agissant des agents d'émulsification -G- hydrosolubles du type colloïde protecteur, il convient d'observer, qu'outre leur fonction émulsifiante, ces agents d'émulsification -G- peuvent également être actifs à titre de promoteurs de l'anti-adhérence, de l'hydrofugation, voire de l'imprimabilité, pour ce qui concerne le domaine de l'anti-adhérence papier.

C'est précisément le cas des Alcools Polyvinyliques (APV) qui peuvent être employés à titre d'additif -H- facultatif dans le cadre de l'invention. Ainsi, les APV peuvent jouer le rôle d'émulsifiants -G- et d'additifs -H-.

Les alcools polyvinyliques (APV) -H- sont des composés obtenus indirectement à partir de leurs esters, par hydrolyse en milieu aqueux ou par alcoolise en milieu anhydre. En pratique, les esters utilisés comme matière première sont couramment les acétates de polyvinyles. Généralement, la lyse des esters conduisant aux APV -H- n'est pas complète. Il reste dans la molécule des radicaux acyles dont la proportion influe sur les propriétés de l'APV -H-, notamment sur sa solubilité. Un mode de définition des APV -H- repose donc sur l'indication de l'indice d'ester (I.E) qui est inversement proportionnel au taux d'hydrolyse. La mesure de l'I.E. s'effectue de manière connue en soi, par neutralisation de l'acidité éventuelle de l'alcool polyvinylique, saponification des groupes acyles et titrage de l'excès d'alcaline saponification.

Les alcools polyvinyliques -H- sont également caractérisés par leur degré de condensation que l'on peut évaluer par la détermination de la viscosité dynamique d'une solution type (désignée par $\eta_{dt}$ dans le présent exposé), sachant que cette variable est d'autant plus élevée que le degré de condensation est plus grand. La viscosité $\eta_{dt}$ correspond au coefficient de viscosité dynamique d'une solution aqueuse d'APV à 4 % poids, mesuré à une température de 20 $\pm$ 5°C à l'aide d'un viscosimètre Brookfield.

Les APV utiles comme émulsifiant -G- et/ou comme additif -H- ont une masse molaire Mw < $10^5$ g/mole. Il s'agit donc d'APV dont la viscosité $\eta_{dt}$ est comprise entre 3 et 40 mPa.s, de préférence entre 5 et 30 mPa.s, et dont le degré d'hydrolyse est compris entre 60 et 100 % en molécule, de préférence entre 75 et 90% en molécule.

Les acétates de polyvinyle sont des APV classiques, utilisables dans l'invention.

Par ailleurs, l'émulsion selon l'invention contient de manière facultative un ou plusieurs additifs **I**, qui peuvent être entre autres :

- $I_1$ = agent bactéricide comme par exemple l'acide sorbique,
- $I_2$ = agent antigel et/ou de mouillage comme par exemple les glycols tels que le propylène ou l'éthylène glycol,
- $I_3$ = antimousse avantageusement sélectionné parmi les antimousses silicones comme par exemple ceux commercialisés par la demanderesse sous la dénomination RHODORSIL® 70414 commercialisé par RHODIA SILICONES,
- $I_4$ = charge de préférence minérale choisie parmi les matières siliceuses ou non, les charges siliceuses étant plus particulièrement préférées,
- $I_5$ = coadditifs de type latex synthétiques associés aux colloïdes protecteurs **H** jouant le rôle d'émulsifiants et de promoteurs d'anti-adhérence (APV) ; Ces latex synthétiques pouvant être par exemple, des (co)polymères butadiènes, des acryliques, des vinyl acétates, etc ;
- $I_6$ = colorant ou pigment,
- $I_7$ = acidifiant tel que par exemple acide acétique.

Concernant les charges siliceuses $I_4$, il convient de noter qu'elles peuvent jouer le rôle de charge renforçante ou semi-renforçante.

Les charges siliceuses renforçantes sont choisies parmi les silices colloïdales, les poudres de silice de combustion et de précipitation ou leur mélange.

Ces poudres présentent une taille moyenne de particule généralement inférieure à 0,1 mm et une surface spécifique BET supérieure à 50 $m^2$/g, de préférence comprise entre 150 et 350 $m^2$/g.

Les charges siliceuses semi-renforçantes telles que des terres de diatomées ou du quartz broyé, peuvent être également employées.

En ce qui concerne les matières minérales non siliceuses, elles peuvent intervenir comme charge minérale semi-renforçante ou de bourrage. Des exemples de ces charges non siliceuses utilisables seules ou en mélange sont le noir de carbone, le dioxyde de titane, l'oxyde d'aluminium, l'alumine hydratée, la vermiculite expansée, la vermiculite non expansée, le carbonate de calcium, l'oxyde de zinc, le mica, le talc, l'oxyde de fer, le sulfate de baryum et la chaux éteinte. Ces charges ont une granulométrie généralement comprise entre 0,001 et 300 mm et une surface BET inférieure

à 100 $m^2$/g.
Sur le plan pondéral, on préfère mettre en oeuvre une quantité de charge comprise entre 20 et 50, de préférence entre 25 et 35 % en poids par rapport à l'ensemble des constituants de la composition.

Suivant une disposition intéressante de l'invention, la proportion d'eau de l'émulsion est supérieure ou égale à 50 % en poids, de préférence supérieure ou égale à 55% en poids et par exemple en pratique de l'ordre de 55 - 60 % en poids ou bien encore de 85 à 90 % en poids.

Selon un autre de ses aspects, la présente invention concerne un procédé de préparation d'une émulsion silicone aqueuse, utilisable notamment comme base d'enduction pour la réalisation de revêtements anti-adhérents et hydrofuges, cette émulsion étant du type de celle définie ci-dessus.
On incorpore le stabilisant polymère hydrophile dans la formulation avant, pendant ou après la formation de l'émulsion silicone aqueuse.

La préparation d'une émulsion utilisée dans l'invention peut être un mélange de deux pré-émulsions, à savoir une pré-émulsion de base $E_1$ et une pré-émulsion catalysante $E_2$, de manière à produire une émulsion $E_3$, qui est diluée ou non avec de l'eau, de manière à ajuster l'extrait sec en silicone en fonction de l'application visée (dépôt silicone souhaitée, type de support traité et technique d'enduction).

Dès lors que l'on dispose d'une émulsion $E_3$ préparée ou non par le procédé décrit ci-dessus et qui présente l'avantage de n'être sujette ni à la coalescence sous cisaillement, ni au foisonnement, ni à la gélification, il est particulièrement intéressant de pouvoir l'utiliser dans des applications de fabrication de polymères silicones réticulés et notamment de revêtements silicones anti-adhérents.

Il s'ensuit que selon un autre de ses objets, la présente invention concerne un procédé de réalisation d'un revêtement, en particulier anti-adhérent et hydrofuge, sur un support fibreux ou non, de préférence en papier, caractérisé en ce qu'il consiste :

- à enduire le support avec l'émulsion décrite ci-dessus, et/ou telle qu'obtenue par le procédé décrit supra,
- et à faire en sorte que la couche enduite réticule en prévoyant, de préférence, une activation thermique.

L'enduction se réalise selon des moyens connus et appropriés, par exemple à la râcle, au rouleau " size-press ", au cylindre gravé ou au " gate roll ".

Les moyens d'activation thermique de la réticulation sont classiquement des fours, (par exemple fours-tunnels), des rouleaux chauds, voire des sources d'infrarouge. Cette activation thermique peut être complétée par une activation actinique et/ou par bombardement d'électrons.

Les supports enduits sont de préférence des supports fibreux et plus préférentiellement encore des supports en papier ou analogues. Dans cette application, le taux d'enduction est inférieur ou égal à 1,2 g silicone / $m^2$ de support de préférence inférieur ou égal à 0,9 g/$m^2$ et plus préférentiellement encore inférieur ou égal à 0,50 g/$m^2$.

Comme autres exemples de supports, on peut citer ceux constitués de polymères synthétiques tels que les polyéthylènes, les polypropylènes ou les polyesters ou bien encore de polymère naturel.

Il va de soi que les supports peuvent se présenter sous toute autre forme que celle de feuille ou de film.

Suivant une application privilégiée de l'émulsion utilisée selon l'invention, le support fibreux ou non comprend sur au moins une de ses faces un revêtement anti-adhérent et hydrofuge (éventuellement imprimable) obtenu par réticulation de ladite émulsion. Plus précisément, ce support peut comporter le revêtement anti-adhérent et hydrofuge sur l'une de ces faces et un revêtement adhésif sur la face opposée. Dans cette réalisation, on envisage notamment des articles tels que des étiquettes, des feuilles, des rubans ou similaires, auto-adhésifs qui ont pour propriété d'être hydrofuges et imprimables, collables les uns sur les autres de manière réversible. Cette dernière caractéristique est particulièrement intéressante pour les étiquettes auto-collantes car elle permet la suppression des supports anti-adhésifs classiques.

Il va de soi que l'invention n'est pas limitée aux supports à faces opposées adhésive/anti-adhérente, il englobe également tous les supports revêtus uniquement d'une couche d'adhésif imprimable qui peuvent être imprimés et utilisés tels quels, par exemple, comme moyen de protection.

Les exemples qui suivent de préparation de l'émulsion silicone considérée et de son application comme revêtement anti-adhérent et hydrofuge pour supports papiers, permettront de mieux comprendre et appréhender l'invention. Ils feront également ressortir les variantes et les avantages de ladite invention, dont les performances en termes de stabilité à la coalescence sous cisaillement en termes de régularité de dépôt silicone sur les faces et en termes de réduction des dusts seront mises en exergue par des tests comparatifs.

DESCRIPTION DES FIGURES :

- La Figure 1 (exemple 2) montre des courbes donnant l'évolution du paramètre granulométrique $D_{50}$ (en $\mu$m) en fonction du temps t de cisaillement (en heures) (Test de stabilité T) pour deux émulsions aqueuses d'huile silicone POE 1 et POE 3 additionnées de polyoxyéthylène (POE) et pour une émulsion silicone témoin E 1.2 sans POE ;
- La Figure 2 (exemple 2) montre des courbes donnant l'évolution du paramètre granulométrique $D_{50}$ (en $\mu$m) en fonction du temps t de cisaillement (en heures) (Test de stabilité T) pour deux émulsions d'huile silicone POE 2 et POE 3 comprenant les POE 2 et 3 (0,08%) et de l'alcool polyvinylique (APV : 1 %) et pour une émulsion silicone témoin E 1.2 sans POE;
- La Figure 3 (exemple 2) montre une courbe (-O-) donnant l'évolution du diamètre moyen (Dm) en $\mu$m et une courbe (-□-) donnant l'évolution du diamètre médian (Dm) en $\mu$m en fonction du temps t de cisaillement (en heures) (Test de stabilité T) pour une émulsion aqueuse d'huile silicone comprenant 0,5% poids de POE 3;
- La Figure 4 (exemple 3) montre des graphes donnant l'évolution du diamètre moyen (Dm) en $\mu$m des particules de phase dispersée en fonction du temps t (en heures) pour :

  - [-x-x-] : une émulsion aqueuse d'huile silicone contenant 1% d'APV (témoin) ;
  - [-0-0-] : une émulsion aqueuse d'huile silicone contenant 1% d'APV et du polyacryamide (PAM) FA 920 à hauteur de 0,5% poids ;
  - [-Δ-Δ-] : une émulsion aqueuse d'huile silicone contenant 1 % d'APV et du polyacryamide (PAM) FA 920 à hauteur de 0,1% poids ;
  - [-O-O-] : une émulsion aqueuse d'huile silicone contenant 1% d'APV et du polyacryamide (PAM) FA 920 à hauteur de 0,01% poids;

- La Figure 5 (exemple 3) montre une courbe (-O-) donnant l'évolution du diamètre moyen (Dm) en $\mu$m et une courbe (-□-) donnant l'évolution du diamètre médian (Dm) en $\mu$m en fonction du temps t de cisaillement (en heures) (Test de stabilité T) pour une émulsion aqueuse d'huile silicone comprenant 0,1% poids de PAM FA 920 VHM ;
- La Figure 6 (exemple 4) montre une courbe (-O-) donnant l'évolution du diamètre moyen (Dm) en $\mu$m et une courbe (-□-) donnant l'évolution du diamètre médian (Dm) en $\mu$m en fonction du temps t de cisaillement (en heures) (Test de stabilité T) pour une émulsion aqueuse d'huile silicone comprenant 0,1% poids d'hydroxypropylguar.

**• EXEMPLES**

**EXEMPLE 1**

**1.1 MATERIAUX**

1. **Emulsion E3,** 300 g, soit de silicone "l'option 25": La quantité d'émulsion utilisée est de 300 g, soit:

- 82,2 g d'option 25 , i.e une émulsion **E1.1** à ~1% d'APV 25/88 (alcool polyvinylique) pour ~38% huile silicone copoly(diméthyl) (méthylvinyl)siloxane à extrémités diméthylvinylsilyle (l'huile Si-Vinyle) dont l'$\eta_{dt}$ = 250 mPa.s et ayant environ 0,75-1 % poids de vinyle ;
- 2,9 g d'émulsion **E1.2** à 2% d'APV 25/88 et 38% d'huile silicone poly(méthylhydrogéno)siloxane à extrémités triméthylsilyle (l'huile SiH) dont l'$\eta_{dt}$ = 30 mPa.s et ayant environ 30% poids de fonctions Si-H ;
- 6 g d'émulsion E2 à 2% d'APV 25/88, 38% d'huile silicone polydiméthylsiloxane dont l'$\eta_{dt}$ = 600 mPa.s et ayant environ 0,4% poids de vinyle (279), cette émulsion contenant quelques ppm de catalyseur de platine.

Le complément est de l'eau permutée.

2. **polymères en solution (stabilisant D) :**

☐ polyoxyethylène "POE" commercialisé par UNION CARBIDE:

- ♦ POE 1 POLYOX ® "WSRN-12K", Mw = $1.10^6$ g/mole
- ♦ POE 2 POLYOX ® "WSR coagulant ", Mw = $5.10^6$ g/mole
- ♦ POE 3 POLYOX ® "WSR-308", Mw = $8.10^6$ g/mole

☐ polyacrylamide (PAM) d'AMERICAN CYANAMIDE de référence FA920 (Mw = 8. $10^6$ g/mole $\eta_{intrinséque}$ = 1,3336) et de référence FA920VHM (Mw ≥ 9· $10^6$).

☐ guars de RHODIA.

### 1.2 METHODES

*Mesure de vortex*: Une solution de 800 ml d'eau est mise sous agitation à l'aide d'un pâle cadre de 15mm de large et 30mm de longueur dans une éprouvette de 1 litre. La vitesse de rotation, environ ~900 tpm, est ajustée pour permettre au vortex dans l'eau d'atteindre 75mm en hauteur par rapport au niveau de l'eau au repos.
Le polymère apportant la viscosité élongationnelle est ajouté goutte par goutte. La hauteur du vortex est mesurée après 20 secondes.
*Test de stabilité* **T** pour évaluer l'effet des stabilisant polymères hydrophiles (POE, PAM et guars )sur la coalescence sous cisaillement d'une émulsion de base.
Ce test de stabilité est fait dans un becher en verre de 7,5 cm de diamètre et de 13 cm de longueur thermostatée à 30˚C. La pale utilisée est une pale à hélice (3 pales) de 3 cm de diamètre et se situe à une distance de 2 cm du fond du becher. La vitesse d'agitation est de 2000 tpm. Toutes les heures, un échantillon est prélevé et la taille de l'émulsion est mesurée sur un granulomètre HORIBA.
*Test d'accrochage* : l'accrochage de l'enduction Silicone est évalué à l'aide d'un test métier consistant à frotter avec l'index la surface Silicone (10 allers retours) et à observer l'apparition de poussières à la surface.
Pas de poussières après 10 passages = excellent.
Poussières après 8 passages = bon.
Poussières avant 8 passages = mauvais.
*Test de réactivité :* La réactivité d'une enduction de bain est évaluée par le niveau de réticulation après 30 secondes à 110˚C dans une étuve. On utilise le test métier dit Loop Test pour caractériser le niveau de réticulation : pouvoir collant adhésif sur adhésif d'un ruban après contact avec la surface Siliconée.
*Brillance* : la brillance de la couche Silicone est évaluée par une simple observation visuelle qualitative.
*Mouillage* : il s'agit de l'aptitude du bain à mouiller le support lors d'une enduction manuelle réalisée au laboratoire en barre de Meyer. On observe visuellement si il y a démouillage de l'enduction avant la mise à l'étuve pour réticulation.

### EXEMPLE 2 :POLYOXYETHYLENE

On met en oeuvre les POE 1 et 3
**2.1** On compare la stabilité sous cisaillement apportée à **E1.1** par les POE.1 et 3 (0,08 %), par rapport à une émulsion de référence **E1.2** sans POE.
La Figure 1 représente une courbe de l'évolution du $D_{50}$ en fonction du temps de cisaillement pour POE1 & POE3 & réf. **E1.2.**
Le POE2 de plus grande masse est le plus efficace pour stabiliser l'émulsion.
**2.2** On compare la stabilité sous cisaillement d'une émulsion **E1.1** à l'aide des POE 1 et 2 titrant 800 ppm.
La Figure 2 représente l'évolution du $D_{50}$ en fonction du temps de cisaillement pour des émulsions à 1% d'APV contenant 0.08% de POE 2 et 3 et une émulsion de référence **E1.2** sans POE.
Les propriétés d'applications (voir le **Tableau 1**) sont très bonnes à l'exception d'une légère diminution de la brillance après 4 heures de cisaillement.

**Tableau 1:** Propriétés d'applications des émulsions stabilisées avec les poly oxyethylènes

| | 0,08% POE 2 | | | | | 0,08% POE 3 | | | | |
|---|---|---|---|---|---|---|---|---|---|---|
| Hrs | accroch | Réactivit | Brillanc | cobb | mouill | accroch | réactivit | brillanc | cobb | Mouill |
| 0 | √ | √ | √ | √ | √√ | √ | √ | √ | √ | √√ |
| 1 | √ | √ | √ | √ | √√ | √ | √ | √ | √ | √√ |
| 2 | √ | √ | √ | √ | √√ | √ | √ | √ | √ | √√ |
| 3 | √ | √ | √ | √ | √√ | √ | √ | √ | √ | √√ |
| 4 | √ | √ | moyen | √ | √√ | √ | √ | moyen | √ | √√ |

Légende : √ = BON √√ = TRES BON

### *POE DE PETITE MASSE*

Les POE de "petite" masse ne développent pas de viscosité élongationnelle, mais présentent une viscosité

normale semblable aux POE de haute masse.

On met en oeuvre un POE 3 de Mw = 300K à une concentration de 0,5% en poids dans une émulsion **E1.1.**

La Figure 3 montre que l'émulsion additivée de 0,5% de POE 3 a une stabilité accrue. Néanmoins les propriétés d'application sont mauvaises, voir le **Tableau 2** ci-dessous.

**Tableau 2:** Propriétés d'applications des émulsions stabilisées avec polyéthylène oxydes basses masses

| 0,08% POE 3 (300K) | | | | | | 0,5% POE 3 (300K) | | | | | |
|---|---|---|---|---|---|---|---|---|---|---|---|
| Hrs | accroch | réactivit | brillanc | Cobb | mouill | Hrs | accroch | réactivit | brillanc | cobb | Mouill |
| 0 | √ | √ | √ | | √ | 0 | √ | √ | √ | | Moyen |
| 1 | X | X | X | | √ | 1,5 | √ | moyen | X | | moyen |
| 4 | X | X | X | | moyen | 4 | √ | √ | X | | moyen |

On peut conclure sur la base des résultats ci-dessus que la stabilité sous cisaillement de l'émulsion papier anti-adhérente est obtenue par utilisation de polymères de hautes masses développant une viscosité élongationnelle.

**EXEMPLE 3**

Poly Acrylamide

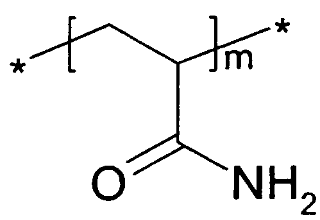

Les polyacrylamides (PAM) de grande masse moléculaire sont également utilisables conformément à l'invention.

On met en oeuvre des PAM à différentes concentrations dans une émulsion **E 1.1.**
La référence utilisée est le Floerger FA920 de la société SNF.

On soumet ces émulsions additivées ou non de PAM au test de stabilité T.
La Figure 4 représente l'évolution de la coalescence sous cisaillement d'une émulsion à base de ~1% en d'APV (φ=40%, $D_{50}$~1,5μm) contenant du polyacrylamide Floerger FA920.de 100 à 5000 ppm.

La Figure 4 montre que le PAM FA920 (masse~8 $10^6$) à hauteur de 0,01% stabilise l'émulsion et la déstabilise à plus haute concentration. En outre, à t = 0, il y a une floculation (par déplétion) initiale qui explique la variation de taille initiale. On observe que l'ajout de 0,5% de PAM flocule l'émulsion réversiblement, au début $D_{50}$ ~ 15 μm, et à t=4 heures $D_{50}$~ 3,5 m.

La Figure 5 présente la stabilisation sous cisaillement d'une émulsion à base de ~ 1% d'APV (φ = 40%, $D_{50}$~ 1,3 μm) contenant du polyacrylamide Floerger FA920 VHM (Mw ≥ $8.10^6$) à 1000ppm.
La Figure 5 montre la stabilisation accrue apportée en utilisant un PAM de "très" haute masse moléculaire. On observe une stabilisation presque parfaite à 0,1%.

Le **Tableau 3** présente les propriétés d'application observées pour les PAM: toutes ces évaluations sont bonnes, surtout l'adhérence et la réactivité, et en particulier le PAM à très haute masse mouille très bien le support. Le PAM avec la masse la plus élevée se montre donc le plus efficace, tout comme le POE.

**Tableau 3:** Propriétés d'applications des émulsions stabilisées avec les polyacrylamides

| 0,1 % PAM (FA920) | | | | | | 0,1 % PAM (FA920VHM) | | | | |
|---|---|---|---|---|---|---|---|---|---|---|
| Hrs | accroch | réactivit | brillanc | cobb | mouill | accroch | réactivit | brillanc | cobb | mouill |
| 0 | √ | √ | √ | | √ | √ | √ | √ | | √√ |

(suite)

| | 0,1 % PAM (FA920) | | | | | 0,1 % PAM (FA920VHM) | | | | |
|---|---|---|---|---|---|---|---|---|---|---|
| Hrs | accroch | réactivit | brillanc | cobb | mouill | accroch | réactivit | brillanc | cobb | mouill |
| 2 | √ | √ | √ | | √ | √ | √ | √ | | √√ |
| 4 | √ | √ | moyen | | √ | √ | √ | √ | | √√ |

**EXEMPLE 4**

GUAR

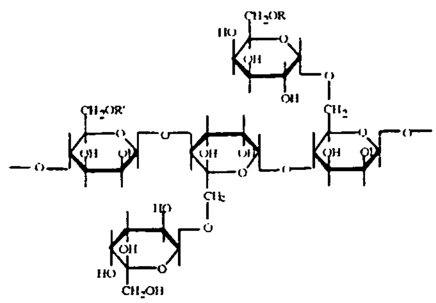

Les guars constituent le troisième type de polymère évalué. Ce sont des β 1,4 polysaccharides composés d'un squelette de mannose avec des galactoses pendant. Le rapport galactose/mannose est de 2/1.

Le guar HP105 est ur: guar hydroxypropylé de masse ~600K avec un degré de substitution de ~ 0,6.

On met en oeuvre d'une émulsion **E 1.1** stabilisée par 0,1% hydroxypropyl guar HP105.

La référence utilisée est **E 1.1** sans guar.

Le diamètre moyen de l'émulsion stabilisée guar HP105 augmente sous cisaillement:

Voir la figure 6 qui représente l'évolution moyenne en taille moyenne d'une émulsion **E 1.1** stabilisée par 0,1 % hydroxy propyl guar HP105.

Le **tableau 4** ci-dessus donne les propriétés d'application de l'émulsion additivée de guar décrite ci-dessus

**Tableau 4**: Propriétés d'applications des émulsions stabilisées avec l'hydroxy propyl guar HP 105

| 0,1 % HP GUAR 105 | | | | | |
|---|---|---|---|---|---|
| hrs | accroch | réactivit | brillanc | cobb | mouill |
| 0 | √ | √ | √ | | √ |
| 2 | √ | √ | √ | | √ |
| 4 | √ | √ | √ | | √ |

Le guar HP105 stabilise l'émulsion de manière satisfaisante, tout comme le POE 2.

**EXEMPLE 5**

Cet exemple compare les performances d'une formulation d'émulsion Silicone contenant du poly-oxyde d'éthylène comparé à une formulation contenant de l'hydroxyéthyl cellulose en tant qu'agent épaississant.

Les formulations sont réalisées à partir des mêmes émulsions Silicone :

- Silcolease 902 (RHODIA) : émulsion d'un mélange d'huile PDMS vinylée et hydrogénées à environ 40% d'extrait sec en Silicone.
- Silcolease 903 (RHODIA): émulsion catalysante au Pt (huile PDMS vinylée plus complexe du Pt) à environ 40% d'extrait sec en Silicone.

Ces émulsions vont être formulées en post addition (mais cela pourrait être fait au moment de la mise en émulsion des huiles Silicone) selon les cas avec :

- de l'HEC 250H de chez Hercules, en tant qu'épaississant

- du POE WSR 308 de chez Union Carbide (masse molaire 8 x$10^6$ g/mole) et du POE WSR coagulent de chez Union Carbide (masse 5x$10^6$ g/mole).

La mousse et les Dusts (dépôts sur les cylindres sécheurs de la ligne d'enduction) sont évaluées de manière visuelle pendant l'essai et à la fin de l'essai.
La composition des 3 formulations mises en oeuvre sont données dans le **tableau 5** ci-après.

**Tableau 5:** Formulations mises en oeuvre

| | 1 | 2 | 3 |
|---|---|---|---|
| Silcolease 902 | 100 | 100 | 100 |
| Silcolease 903 | 12 | 12 | 12 |
| POE 8x$10^6$ | 2.9 | | |
| POE 5x$10^6$ | | 2.9 | |
| HEC | | | 0.71 |
| Eau | 250 | 250 | 250 |

Les résultats obtenus avec ces différentes formulations sont résumés dans le **tableau 6** suivant :

**Tableau 6**

| Formulation | D50 Initial | D 50 Après 4 heures | D 90 Après 4 heures | Dépôt Face 1 g/m$^2$ | Dépôt Face 2 G/m$^2$ | Evaluation Dusts après 4 heures |
|---|---|---|---|---|---|---|
| 1 | 0.8 μm | 1 μm | | 0.47 | 0.48 | Bon |
| 2 | 0.8 μm | 12μm | | - | - | - |
| 3 | 0.8μm | 33μm | | 0.5 | 0.36 | Mauvais |

Ils mettent en évidence :

- la stabilité à la coalescence sous cisaillement apportée par le POE, et d'autant plus importante que la masse du polymère est élevée (test de stabilité T décrit supra) ;
- la régularité et l'homogénéité des dépôts Silicones mesurés en g/m$^2$ par la méthode de fluorescence X sur appareil Oxford X- ray 3000) sur les deux faces du papier : ces dépôts ont été obtenus après enduction sur size press et réticulation à 130°C sur un support papier sulfurisé non poreux ;
- la diminution des dusts (dépôts de Silicones) évalués visuellement sur les rouleaux de la machine après enduction ;
- la suppression de la mousse.

## Revendications

1. Utilisation d'au moins un (co)polymère hydrophile stabilisant de masse molaire Mw telle que $20.10^6 \geq Mw \geq 4.10^6$ g/mole, pour réduire les dépôts résiduels sur les cylindres d'une machine d'enduction, de silicone issu d'émulsions silicone aqueuses propres à réticuler pour former des revêtements anti-adhérents sur des supports souples, ledit (co)polymère hydrophile stabilisant étant choisi dans le groupe comprenant les polyéthers aliphatiques obtenus à partir de monomères comprenant au moins un reste alkylène linéaire ou ramifié ayant de 1 à 6 atomes de carbone, et ledit (co)polymère hydrophile stabilisant étant sélectionné de telle sorte que l'émulsion possède les caractéristiques granulométriques suivantes, s'agissant de la phase dispersée silicone:

$$D_{50} \leq 7\ \mu m$$

$$D_{90} \leq 20\ \mu m$$

au bout de 4 heures dans un test de stabilité T défini dans la description et pour une granulométrie initiale telle que :

$$D_{50} \leq 0{,}7\ \mu m$$

$$D_{90} \leq 1{,}5\ \mu m.$$

**2.** Utilisation selon la revendication 1 **caractérisée en ce que** le ledit (co)polymère hydrophile stabilisant est sélectionné de telle sorte que l'émulsion possède les caractéristiques granulométriques suivantes, s'agissant de la phase dispersée silicone:

$$D_{50} \leq 3\ \mu m$$

$$D_{90} \leq 10\ \mu m$$

au bout de 4 heures dans un test de stabilité T défini dans la description et pour une granulométrie initiale telle que :

$$D_{50} \leq 0{,}7 \mu m$$

$$D_{90} \leq 1{,}5\ \mu m.$$

**3.** Utilisation selon la revendication 1 ou 2 **caractérisée en ce que** le stabilisant est choisi dans le groupe de (co) polymères hydrophiles comprenant les:

o poly(méthylène oxyde)
o poly(éthylène oxyde)
o poly(propylène oxyde)
o copoly(méthylène oxyde)(propylène oxyde)
o polyoxéthane
o copoly(méthylène oxyde)(propylène oxyde).

**4.** Utilisation selon l'une quelconque des revendications précédentes, **caractérisée en ce que** la concentration Cs, exprimée en % poids par rapport à la masse de POS de l'émulsion, est telle que :

$$0,1 \leq Cs \leq 5.$$

**5.** Utilisation selon la revendication 4, **caractérisée en ce que** la concentration Cs, exprimée en % poids par rapport à la masse de POS de l'émulsion, est telle que :

$$0,5 \leq Cs \leq 2.$$

**6.** Utilisation selon l'une quelconque des revendications 1 à 5, **caractérisée en ce que** l'émulsion comprend au moins un alcool polyvinylique (APV), dont la viscosité dynamique $\eta_{dt}$ est comprise entre 5 et 40 mPa.s et dont le degré d'hydrolyse est compris entre 80 et 98.

**7.** Utilisation selon la revendication 6, **caractérisée en ce que** le degré d'hydrolyse de l'alcool polyvinylique (APV) est compris entre 85 et 95.

## Claims

1. Use of at least one stabilizing hydrophilic (co)polymer having a molecular weight $M_w$ such that $20 \times 10^6 \geq M_w \geq 4 \times 10^6$ g/mol for reducing the residual deposits, on the rolls of a coating machine, of silicone derived from aqueous silicone emulsions likely to crosslink to form non-stick coatings on flexible supports, said stabilizing hydrophilic (co) polymer being chosen from the group comprising aliphatic polyethers obtained from monomers comprising at least one linear or branched alkylene residue having from 1 to 6 carbon atoms, and said stabilizing hydrophilic (co)polymer being chosen so that the emulsion has the following particle size characteristics, regarding the dispersed silicone phase:

$$D_{50} \leq 7\ \mu m$$

$$D_{90} \leq 20\ \mu m$$

at the end of 4 hours in a stability test T defined in the description and for an initial particle size such that:

$$D_{50} \leq 0.7\ \mu m$$

$$D_{90} \leq 1.5\ \mu m.$$

2. Use according to Claim 1, **characterized in that** said stabilizing hydrophilic (co)polymer is chosen so that the emulsion has the following particle size characteristics, regarding the dispersed silicone phase:

$$D_{50} \leq 3\ \mu m$$
$$D_{90} \leq 10\ \mu m$$

at the end of 4 hours in a stability test T defined in the description and for an initial particle size such that:

$$D_{50} \leq 0.7\ \mu m$$

$$D_{90} \leq 1.5\ \mu m.$$

3. Use according to Claim 1 or 2, **characterized in that** the stabilizer is chosen from the group of hydrophilic (co) polymers comprising:

   ○ Poly(methylene oxide)
   ○ Poly(ethylene oxide)
   ○ Poly(propylene oxide)
   ○ methylene oxide/propylene oxide copolymer
   ○ polyoxyethane
   ○ methylene oxide/propylene oxide copolymer.

4. Use according to any one of the preceding claims, **characterized in that** the concentration Cs, expressed in wt% relative to the weight of POS in the emulsion, is such that:

$$0.1 \leq Cs \leq 5.$$

**5.** Use according to Claim 4, **characterized in that** the concentration Cs, expressed in wt% relative to the weight of POS in the emulsion, is such that:

$$0.5 \leq Cs \leq 2.$$

**6.** Use according to any one of Claims 1 to 5, **characterized in that** the emulsion comprises at least one polyvinyl alcohol (PVA), of which the dynamic viscosity $\eta_{dt}$ is between 5 and 40 mPa.s and of which the degree of hydrolysis is between 80 and 98.

**7.** Use according to Claim 6, **characterized in that** the degree of hydrolysis of the polyvinyl alcohol (PVA) is between 85 and 95.

## Patentansprüche

**1.** Verwendung mindestens eines hydrophilen stabilisierenden (Co)polymer mit einer Molmasse Mw von $20 \times 10^6 > Mw > 4 \times 10^6$ g/mol zur Verringerung von sich auf Zylindern einer Überzugsmaschine bildenden rückständigen Siliconablagerungen aus wässrigen vernetzenden Siliconemulsionen zur Bildung antiklebender Überzüge auf weichen Unterlagen, wobei das genannte hydrophile stabilisierende (Co)polymer aus der Gruppe ausgewählt ist, umfassend aliphatische Polyether aus Monomeren, umfassend mindestens einen linearen oder verzweigten Alkylenrest mit 1 bis 6 Kohlenstoffatomen, und das genannte hydrophile stabilisierende (Co)polymer so ausgewählt ist, dass die Emulsion der dispergierten Siliconphase die folgenden charakteristischen Korngrößen:

$$D_{50} \leq 7\ \mu m$$

$$D_{90} \leq 20\ \mu m$$

nach 4 h in einem in der Beschreibung definierten Stabilitätstest T für eine anfängliche Korngröße von:

$$D_{50} \leq 0{,}7\ \mu m$$

$$D_{90} \leq 1{,}5\ \mu m$$

aufweist.

**2.** Verwendung gemäß Anspruch 1, **dadurch gekennzeichnet, dass** das genannte hydrophile stabilisierende (Co) polymer so ausgewählt ist, dass die Emulsion der dispergierten Siliconphase die folgenden charakteristischen Korngrößen:

$$D_{50} \leq 3\ \mu m$$

$$D_{90} \leq 10\ \mu m$$

nach 4 h in einem in der Beschreibung definierten Stabilitätstest T für eine anfängliche Korngröße von:

$$D_{50} \leq 0,7\ \mu m$$

$$D_{90} \leq 1,5\ \mu m$$

aufweist.

**3.** Verwendung gemäß Anspruch 1 oder 2, **dadurch gekennzeichnet, dass** das Stabilisiermittel aus der Gruppe von hydrophilen (Co)polymeren ausgewählt ist, umfassend:

- Poly(methylenoxid)
- Poly(ethylenoxid)
- Poly(propylenoxid)
- Copoly (methylenoxid) (propylenoxid)
- Polyoxethan
- Copoly(ethylenoxid) (propylenoxid).

**4.** Verwendung gemäß einem der vorhergehenden Ansprüche, **dadurch gekennzeichnet, dass** die Konzentration Cs der POS-Masse der Emulsion in Gewichtsprozent:

$$0,1 \leq Cs \leq 5$$

beträgt.

**5.** Verwendung gemäß Anspruch 4, **dadurch gekennzeichnet, dass** die Konzentration Cs der POS-Masse der Emulsion in Gewichtsprozent:

$$0,5 \leq Cs \leq 2$$

beträgt.

**6.** Verwendung gemäß einem der Ansprüche 1 bis 5, **dadurch gekennzeichnet, dass** die Emulsion mindestens einen Polyvinylalkohol (PVA) umfasst, dessen dynamische Viskosität $\eta_{dt}$ 5 bis 40 mPa x s und dessen Hydrolysegrad 80 bis 98 betragen.

**7.** Verwendung gemäß Anspruch 6, **dadurch gekennzeichnet, dass** der Hydrolysegrad des Polyvinylalkohol (PVA) 85 bis 95 beträgt.

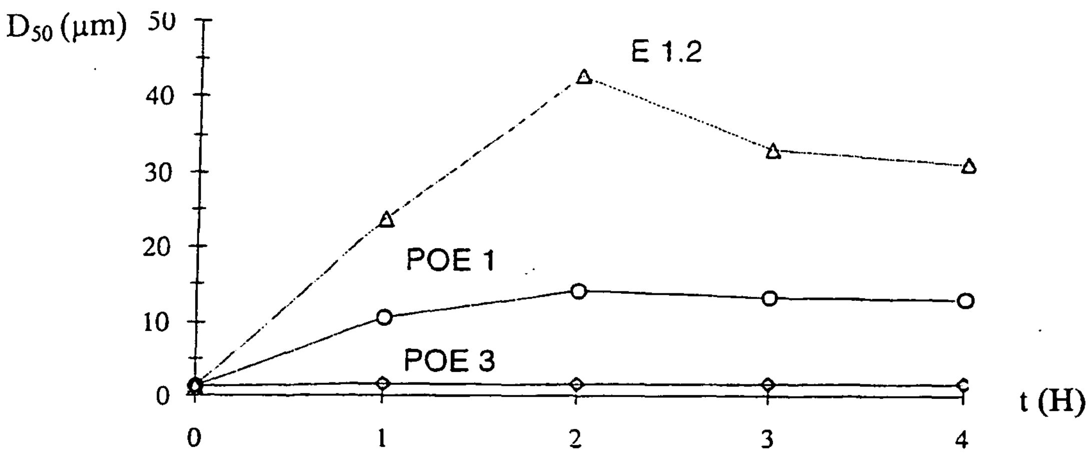
D50 (µm)
50
40
30
20
10
0
E 1.2
POE 1
POE 3
0
1
2
3
4
t (H)

Fig.1

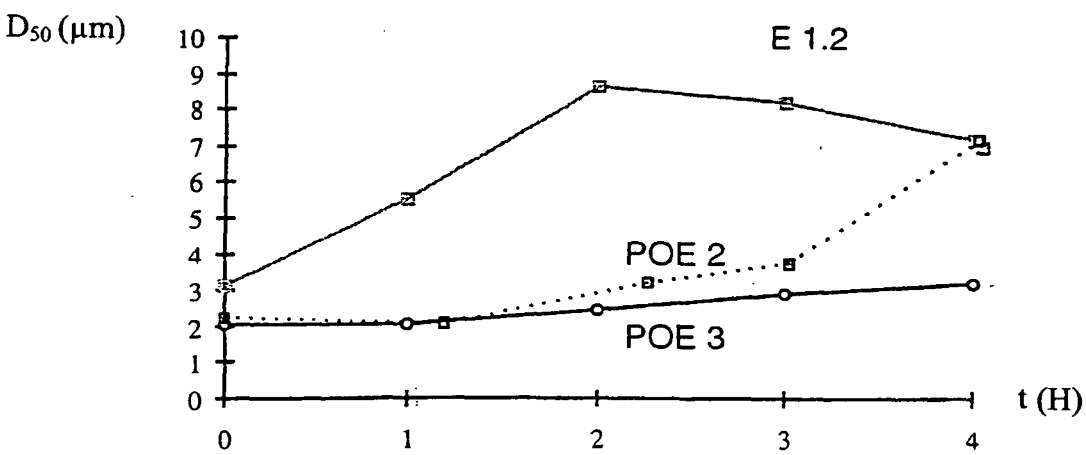
D50 (µm)
10
9
8
7
6
5
4
3
2
1
0
E 1.2
POE 2
POE 3
0
1
2
3
4
t (H)

Fig.2

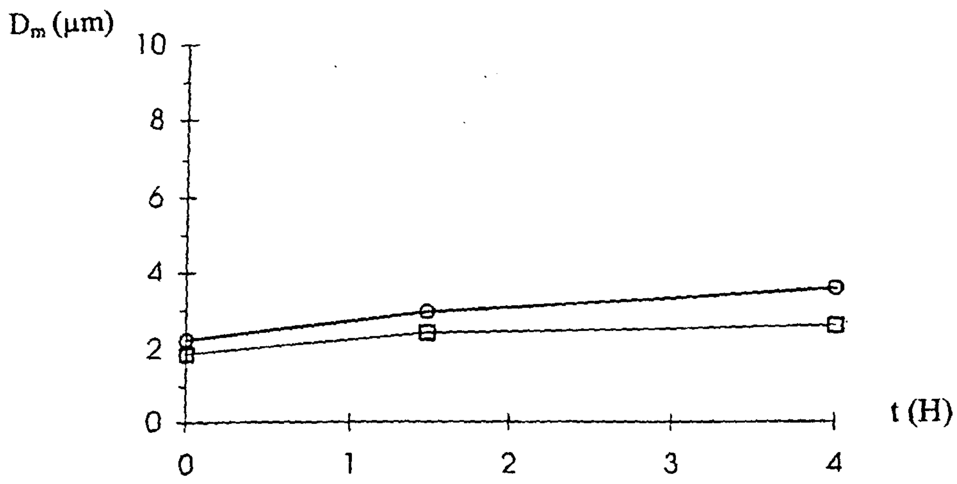


Fig.3

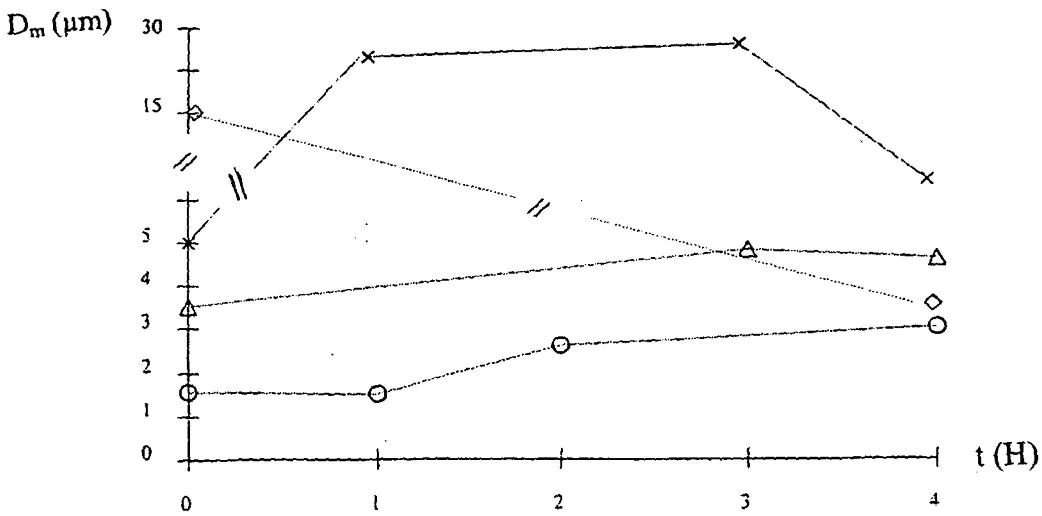


Fig.4

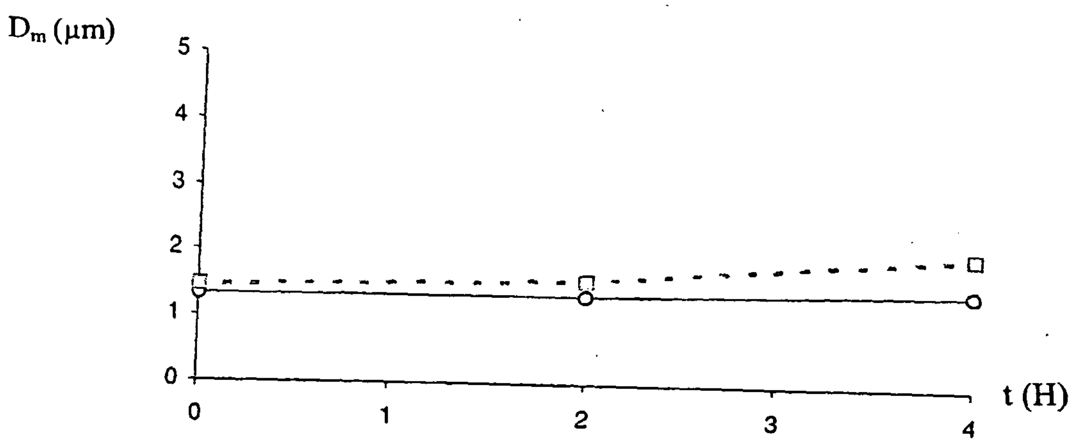


Fig.5

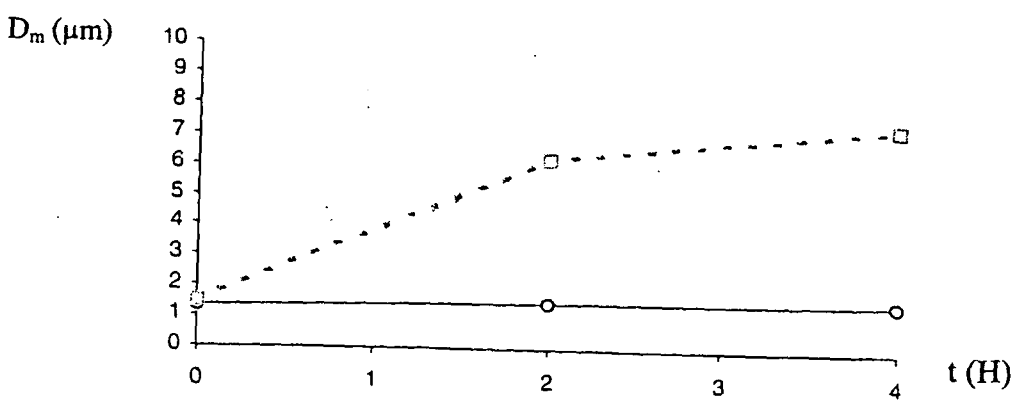


Fig.6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 4347346 A
- EP 0219720 A
- EP 0454130 A
- EP 0523660 A
- FR 9802858 W
- WO 9935181 A
- US 3220972 A
- US 3697473 A
- US 4340709 A
- US 3284406 A
- US 3434366 A
- US 3159601 A
- US 3159602 A
- EP 0057459 A
- EP 0188978 A
- EP 0190530 A
- US 3419593 A
- US 3715334 A
- US 3377432 A
- US 3814730 A
- FR 1528464 B
- FR 2372874 A


### Littérature non-brevet citée dans la description


- *Informations Chimie,* Juin 1975, vol. 146, 119-126